19 Europäisches Patentamt
European Patent Office
Office européen des brevets

11 Veröffentlichungsnummer: **0 175 425 B1**

12 **EUROPÄISCHE PATENTSCHRIFT**

45 Veröffentlichungstag der Patentschrift: **03.03.93**

51 Int. Cl.5: **G02B 6/12**, G02F 1/09

21 Anmeldenummer: **85201486.9**

22 Anmeldetag: **18.09.85**

54 **Planarer optischer Wellenleiter und Verfahren zu seiner Herstellung.**

30 Priorität: **21.09.84 DE 3434631**

43 Veröffentlichungstag der Anmeldung:
**26.03.86 Patentblatt 86/13**

45 Bekanntmachung des Hinweises auf die Patenterteilung:
**03.03.93 Patentblatt 93/09**

84 Benannte Vertragsstaaten:
**DE FR GB**

56 Entgegenhaltungen:
**DE-A- 2 304 026**
**DE-B- 2 156 917**

**PATENT ABSTRACTS OF JAPAN, Band 3, Nr. 18 (E-91), 16. Februar 1979, Seite 20 E91; & JP - A - 53 145 653**

**JOURNAL OF PHYSICS D: APPLIED PHYSICS, Band 11, Nr. 8, Juni 1978, pages, 1229-1235, GB; L. DE BROUCKERE et al.: "The influence of the rotation rate on the fundamental properties of (Sm, Y)3(Fe, Ga)5012 epitaxial magnetic layers"**

73 Patentinhaber: **Philips Patentverwaltung GmbH**
**Wendenstrasse 35 Postfach 10 51 49**
**W-2000 Hamburg 1(DE)**

84 Benannte Vertragsstaaten:
**DE**

73 Patentinhaber: **N.V. Philips' Gloeilampenfabrieken**
**Groenewoudseweg 1**
**NL-5621 BA Eindhoven(NL)**

84 Benannte Vertragsstaaten:
**FR GB**

72 Erfinder: **Tolksdorf, Wolfgang, Prof. Dr. Dipl. Chem.**
**Königsberger Strasse 34**
**W-2082 Tornesch(DE)**
Erfinder: **Bartels, Inske**
**Am Wall 5**
**W-2080 Pinneberg(DE)**
Erfinder: **Pross, Elke, Dipl. Phys.**
**Scheelring 14**
**W-2000 Hamburg 61(DE)**

IEEE JOURNAL OF OUANTUM ELECTRONICS, Band OE-18, Nr. 11, November 1982, Seiten 1975-1981, New York, US; M. TATEDA et al.: " Design feasibility of a single-mode optical isolator"

(74) Vertreter: **Kupfermann, Fritz-Joachim, Dipl.-Ing. et al Philips Patentverwaltung GmbH Wenden-strasse 35 Postfach 10 51 49 W-2000 Hamburg 1 (DE)**

**Beschreibung**

Die Erfindung bezieht sich auf ein Verfahren zur Herstellung eines planaren optischen Wellenleiters mit einer Kristalleinheit, die aus einem nicht magnetischen Substrat mit einer ersten und einer zweiten magnetooptischen Schicht besteht, wobei die beiden Schichten aus einem Material auf der Basis von Eisen-Granat bestehen und einen bestimmten Brechungsindexunterschied aufweisen, mit mehreren Schritten.

In der optischen Nachrichtenübertragung mittels Lichtleitfasern aus Glas werden Einweg-Wellenleiter zum Schutz der dort eingesetzten Halbleiter-Laserdioden vor aus der angekoppelten Strecke zurückreflektiertem Licht als optische Isolatoren oder ggf. auch als optische Zirkulatoren eingesetzt, wobei die nichtreziproken Eigenschaften von magnetooptischen Materialien aufgrund der Faraday-Drehung ausgenutzt werden. Planare optische Einweg-Wellenleiter, die durch epitaktisch auf einem Substrat angebrachte Schichten aus magnetooptischem Material realisiert werden, müssen dabei in der Schichtdicke der Strahlung-leitenden Schicht an die Abmessungen der anzukoppelnden Lichtleitfasern angepaßt sein; Monomode-Lichtleitfasern haben z.B. einen Kerndurchmesser im Bereich von 5 bis 10 $\mu$m, d.h., die Schichtdicke der Strahlung-leitenden Schicht eines Monomode-Wellenleiters muß auch im Bereich von 5 bis 10 $\mu$m liegen.

Schichten dieser Abmessungen lassen sich durch Flüssigphasenepitaxie (LPE) aus sehr verdünnten schmelzflüssigen Lösungen darstellen, bei denen das Lösungsmittel üblicherweise aus einem Gemisch von $Pb0$ und $B_2O_3$ besteht. Als Material für die magnetooptische Schicht kommt z.B. Yttrium-Eisen-Granat ($Y_3Fe_5O_{12}$), als Material für das Substrat, auf dem derartige Schichten epitaktisch aufwachsen, kommt Gadolinium-Gallium-Granat ($Gd_3Ga_5O_{12}$) in Form von im Handel erhältlichen 0,5 mm dicken (111)-Einkristallscheiben in Betracht. Für die magnetooptischen Schichten sind auch andere Eisen-Granate geeignet, wie z.B. $Gd_3Fe_5O_{12}$ oder auch Wismut-substituierte Eisen-Granate.

Es ist bekannt, auf derartigen Substrateinkristallscheiben nacheinander in zwei getrennten Epitaxieprozessen aus zwei unterschiedlichen Schmelzen zwei Eisengranatschichten unterschiedlicher Zusammensetzung aufwachsen zu lassen. J. Pistora et al. beschreiben in Digest of the INTERMAG Conference 1984, Seite 420, daß zunächst aus einer Schmelze eine Sm- oder Ga-substituierte Yttrium-Eisen-Granat-Schicht einer Schichtdicke von 0,8 $\mu$m mit einem Brechungsindex $n_1$ = 2,18 ± 0,02 auf einem Substrat epitaktisch erzeugt wird und daß anschließend eine zweite epitaktische Schicht einer Dicke von 1,5 $\mu$m mit einem Brechungsindex $n_2$ = 2,30 ± 0,02 aus nominell unsubstituiertem Yttrium-Eisen-Granat erzeugt wird.

Mit diesem bekannten Schichtaufbau sind nun folgende Nachteile verbunden:

In der optischen Nachrichtenübertragung mittels Lichtleitfasern wird für eine hochratige Datenübertragung die Monomode-Technik angewendet. Aufgrund des großen Brechungsindexunterschiedes $\Delta n = n_2 - n_1 = 0,12$ des bekannten Schichtaufbaues ist keine Monomode-Datenübertragung, sondern nur eine Multimode-Datenübertragung möglich. Weitere Nachteile des bekannten Wellenleiters sind, daß mit zwei unterschiedlichen Schmelzen zur Herstellung der magnetooptischen Schichten gearbeitet werden muß, also zwei getrennte Arbeitsgänge erforderlich sind und daß die Einstellung des Brechungsindexunterschiedes $\Delta n$ zwischen den beiden magnetooptischen Schichten nur sehr ungenau erfolgen kann. Ein weiterer Nachteil des bekannten Schichtaufbaues ist, daß zwischen den beiden Eisengranatschichten ($Y_3(Fe,Ga)_5O_{12}$ und $Y_3Fe_5O_{12}$) infolge des zweiten Epitaxieprozesses zwischen der bereits erzeugten $Y_3(Fe,Ga)_5O_{12}$-Schicht und der zu erzeugenden $Y_3Fe_5O_{12}$-Schicht eine Übergangsschicht (Transient) entsteht, die eine abweichende Zusammensetzung und folglich auch einen anderen Brechungsindex hat.

Aus der japanischen Patentanmeldung JP-A 53-145653 ist ein epitaktisch hergestellter Wellenleiter mit zwei magnetooptischen Schichten aus Seltenerdmetall-Eisen-Granat bekannt, wobei die beiden magnetooptischen Schichten unterschiedliche Brechungsindices infolge unterschiedlicher Substituenten im Material für die erste und für die zweite magnetooptische Schicht (Gallium und Germanium) haben. Mit diesem bekannten Wellenleiter sind ähnliche Nachteile verbunden, wie sie oben bereits diskutiert wurden: es muß mit zwei unterschiedlichen Schmelzen zur Herstellung der magnetooptischen Schichten gearbeitet werden, es sind also zwei getrennte Arbeitsgänge erforderlich. Infolge des zweiten Epitaxieprozesses ergibt sich auch hier der Nachteil, daß eine Übergangsschicht (Transient) zwischen der ersten und der zweiten magnetooptischen Schicht entsteht, die eine abweichende Zusammensetzung und damit auch einen anderen Brechungsindex hat. Für gewisse Anwendungszwecke nicht optimal ist überdies der relativ große Unterschied zwischen den Brechungsindices der ersten und der zweiten magnetooptischen Schicht im Bereich von 0,01 bis 0,001.

Der Erfindung liegt die Aufgabe zugrunde, ein Verfahren zur Herstellung eines planaren optischen Wellenleiters der eingangs beschriebenen Art zu schaffen, bei dem auf sehr einfache Weise zwei magnetooptische Schichten mit einem sehr geringen Brechungsindexunterschied in einem einzigen Arbeitsgang erzeugt und Wellenleiter für Monomode-Datenübertragung geschaffen werden können.

Diese Aufgabe wird erfindungsgemäß dadurch gelöst, daß das Verfahren mit Schichten mit einem Brechungsindexunterschied zwischen $1 \times 10^{-3}$ und $1 \times 10^{-2}$ folgende Schritte enthält:

- Epitaktisches Abscheiden der ersten Schicht auf das in einer unterkühlen, Eisen-Granat enthaltenden Schmelze in einer ersten Rotationsgeschwindigkeit rotierende Substrat;
- epitaktische Abscheiden der zweiten Schicht auf der ersten Schicht aus ein und derselben Schmelze bei einer zweiten Rotationsgeschwindigkeit,

wobei der Einbau von Brechungsindex ändernden Ionen in das Eisen-Granat-Material durch die Rotationsgeschwindigkeit des Substrates gesteuert wird und die Anderung der Rotationsgeschwindigkeit des Substrates so erfolgt, daß sich der vorgesehene Brechungsindexunterschied zwischen den zwei magnetooptischen Schichten ergibt.

Nach einer vorteilhaften Weiterbildung der Erfindung hat das Material für die magnetooptischen Schichten eine Zusammensetzung gemäß der Formel $Y_{3-x}Pb_xFe_5O_{12}$ mit x = 0,007 bis 0,025 für die dem Substrat unmittelbar benachbarte erste magnetooptische Schicht und mit x = 0,02 bis 0,05 für die auf der ersten magnetooptischen Schicht angebrachte zweite magnetooptische Schicht.

Der erfindungsgemäß hergestellte Wellenleiter ist mit Vorteil zur Herstellung eines optischen Einweg-Wellenleiters, insbesondere im Spektralbereich $0,8 \leq \lambda \leq 1,6\mu m$, also für Strahlung aus dem nahen Infrarotbereich, einsetzbar.

Der Erfindung liegt die Erkenntnis zugrunde, daß der Einbau von den Brechungsindex ändernden Ionen in eine Eisen-Granatschicht, was sowohl für Ionen gilt, die auf Dodekaederplätzen eingebaut werden, also z.B. Pb und/oder Bi als auch für Ionen, die auf Oktaederplätzen eingebaut werden, z.B. Ga, allein durch die Rotationsgeschwindigkeit des Substrates in der Schmelze bei gleichzeitiger Unterkühlung der Schmelze gesteuert werden kann. Bei erhöhter Rotation des Substrates wird z.B. ein erhöhter Pb-Anteil, aber auch bei z.B. Ga-dotierten Eisen-Granat-Schmelzen, ein erniedrigter Ga-Anteil eingebaut; beides führt zu einer Erhöhung des Brechungsindex der epitaktischen Schicht.

Die mit der Erfindung erzielten Vorteile bestehen darin, daß der Brechungsindexunterschied $\Delta n$ zwischen den beiden epitaktischen magnetooptischen Schichten allein durch die Epitaxiebedingungen sehr genau im Bereich sehr geringer Abweichungen eingestellt werden kann und daß die Prozeßführung zum Aufwachsen dieser epitaktischen magnetooptischen Schichten mit einem unterschiedlichen Brechungsindex, also unterschiedlicher Zusammensetzung, ohne Prozeßunterbrechung aus ein und derselben Schmelze möglich ist.

Da dünne epitaktische Schichten, z.B. aus Yttrium-Eisen-Granat, aus sehr verdünnten schmelzflüssigen Lösungen gemeinhin mit einem Lösungsmittel in Form von PbO und $B_2O_3$ hergestellt werden, bot es sich an, den Einbau von Pb als brechungsindexänderndem Ion mit Hilfe unterschiedlicher Rotationsgeschwindigkeiten zu untersuchen. Als Ausführungsbeispiel der Erfindung wird daher die Herstellung von unterschiedlichen magnetooptischen Schichten der Zusammensetzung $Y_{3-x}Pb_xFe_5O_{12}$ beschrieben.

Es ist hierbei anzumerken, daß, obwohl ein Losungsmittel in Form von PbO und $B_2O_3$ eingesetzt wurde, der Boreinbau in die anwachsende Schicht so gering ist, daß er zu vernachlässigen ist.

Die Figuren zeigen

Fig. 1 Prinzipdarstellung eines planaren optischen Einweg-Wellenleiters nach der Erfindung,

Fig. 2 Darstellung des Pb-Gehaltes (x) bei zwei verschiedenen Rotationsgeschwindigkeiten des Substrates ($\omega_1$ und $\omega_2$) als Funktion des Abstandes (d) zur Oberfläche.

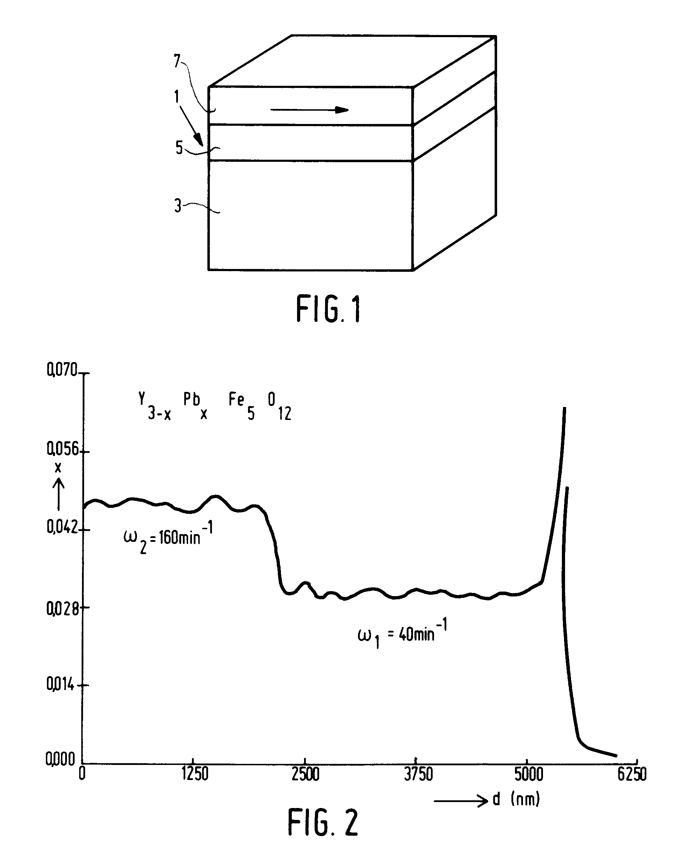

In Fig. 1 ist ein planarer optischer Wellenleiter 1 mit einem Substrat 3 aus $Gd_3Ga_5O_{12}$ dargestellt, wobei das Substrat aus einer 500 $\mu m$ dicken (111)-orientierten Einkristallscheibe besteht. Als erste magnetooptische Schicht 5 ist eine epitaktische $Y_{3-x}Pb_xFe_5O_{12}$-Schicht angebracht mit x = 0,007 bis 0,025 und mit einem Brechungsindex $n_1$ im Bereich von 2,2109 bis 2,2203. Als zweite magnetooptische Schicht 7 ist eine epitaktische $Y_{3-x}Pb_xFe_5O_{12}$-Schicht angebracht mit x = 0,02 bis 0,04 und einem Brechungsindex $n_2$ im Bereich von 2,2155 bis 2,2250. Der Brechungsindexunterschied $\Delta n = n_2-n_1$ liegt dabei im Bereich von 1,8 bis $4,7 \times 10^{-3}$.

Zur Herstellung der magnetooptischen Schichten 5 und 7 wurde das z.B. aus J. Crystal Growth $\underline{52}$ - (1981), Seiten 722 bis 728 bekannte Flüssigphasenepitaxieverfahren mit horizontal gehalterten 0,5 $\overline{mm}$ dicken (111)-orientierten $Gd_3Ga_5O_{12}$-Einkristallscheiben eines Durchmessers von 30 mm als Substrat benutzt. Für die Herstellung der magnetooptischen Schichten 5 und 7 wurde entweder eine Schmelze I oder eine Schmelze II eingesetzt, deren Zusammensetzungen (Anteil der Kationen in der Schmelze) aus der nachfolgenden Tabelle 1 hervorgehen.

Die Schmelzen I und II hatten, bezogen auf die eingesetzten Oxide, folgende Zusammensetzung (Angaben in Gew.%):

| Schmelze I | | Schmelze II |
|---|---|---|
| Pb0 | 90,88 | 87,14 |
| $B_2O_3$ | 1,99 | 3,40 |
| $Fe_2O_3$ | 6,46 | 8,70 |
| $Y_2O_3$ | 0,67 | 0,76 |
| | 100,00 | 100,00 |

Tabelle 1

**Schmelzzusammensetzung**

| Kationen | Anteil der Kationen in der Schmelze [Atom-%] | |
| --- | --- | --- |
| | Schmelze I | Schmelze II |
| Pb | 73,874 | 64,663 |
| B | 10,372 | 16,176 |
| Fe | 14,678 | 18,046 |
| Y | 1,077 | 1,115 |

Doppelschichten Nr. 1 bis Nr. 3 mit abweichender Zusammensetzung und demzufolge abweichenden Brechungsindices $n_1$, $n_2$ wurden aus den Schmelzen I oder II unter den in Tabelle 2 angegebenen Bedingungen hergestellt.

Tabelle 2

| | Doppelschicht Nr. 1 aus Schmelze I ($T_s$ = 931°C) | | Doppelschicht Nr. 2 aus Schmelze I ($T_s$ = 931°C) | | Doppelschicht Nr. 3 aus Schmelze II ($T_s$ = 925°C) | |
|---|---|---|---|---|---|---|
| | Schicht unten | Schicht oben | Schicht unten | Schicht oben | Schicht unten | Schicht oben |
| $\Delta T$ [K] | 43 | 43 | 7 | 41 | 58 | 58 |
| $\omega$ [min$^{-1}$] | 30 | 160 | 60 | 160 | 30 | 160 |
| $d$ [μm] | 4,6 | 4,6 | 4,8 | 6,1 | 3,0 | 6,2 |
| x Pb | 0,01 | 0,02 | 0,007 | 0,03 | 0,025 | 0,04 |
| n | 2,2137 | 2,2155 | 2,2109 | 2,2155 | 2,2203 | 2,2250 |
| $\Delta n = n_2 - n_1$ | $1,8 \cdot 10^{-3}$ | | $4,6 \cdot 10^{-3}$ | | $4,7 \cdot 10^{-3}$ | |

$T_s$ = Sättigungstemperatur der Schmelze

n = Brechungsindex, gemessen an identisch hergestellten Einzelschichten

$\Delta T$ = Unterkühlung der Schmelze

$\omega$ = Rotationsgeschwindigkeit des Substrats in der Schmelze

d = Schichtdicke

x Pb = Pb-Anteil in Formeleinheiten

$\Delta n$ = Brechungsindexunterschied zwischen der ersten (Schicht unten) und der zweiten (Schicht oben) magnetooptischen Schicht

Aus der in Tabelle 1 in ihrer Zusammensetzung angegebenen Schmelze I wurde die Doppelschicht Nr. 1 unter den in Tabelle 2 angegebenen Versuchsbedingungen hergestellt mit $\Delta n = 1,8 \times 10^{-3}$. Die Erhöhung des Pb-Gehaltes und damit die Erhöhung der Werte für den Brechungsindex von $n_1$ auf $n_2$ durch die Erhöhung der Rotationsgeschwindigkeit $\omega$ erfolgt in einem Schichtbereich, der kleiner ist als 0,2 μm. Dies wurde mit einer Blei-Tiefenprofilanalyse gemäß J. Chrystal Growth 52 (1981), Seiten 722 bis 728

EP 0 175 425 B1

(secondary ion mass spectrometry SIMS) an einer aus einer identischen Schmelze hergestellten Doppelschicht gemessen. Bei dieser Doppelschicht war die Unterkühlung $\Delta T = 51K$, die Rotationsgeschwindigkeit für die erste, unmittelbar auf dem Substrat angebrachte magnetooptische Schicht betrug $\omega 1 = 40$ min$^{-1}$ und die Rotationsgeschwindigkeit für die zweite magnetooptische, auf der ersten magnetooptischen Schicht angebrachte Schicht betrug $\omega_2 = 160$ min$^{-1}$. Das Ergebnis ist in Fig. 2 dargestellt. Deutlich ist eine bleireiche Transientzone in 5100 nm Tiefe zu erkennen, die bei diesen Schmelzen immer bei Beginn des Epitaxieprozesses, in dem beschriebenen Fall also direkt am Gadolinium-Gallium-Granat-Substrat, auftritt. Nimmt man diese schmale Inhomogenitätszone von ca. 0,2 $\mu$m Dicke in Kauf, so kann der Brechungsindexsprung bei einem zweistufigen Epitaxieprozeß durch Wahl unterschiedlicher Unterkühlungen $\Delta T$ für die beiden magnetooptischen Schichten sogar noch erhöht werden. Die Versuchsbedingungen und die Ergebnisse einer derartig hergestellten Doppelschicht (Doppelschicht Nr. 2 gemäß Tabelle 2) aus der Schmelze I sind in Tabelle 2 zusammengefaßt. Trotz der Transientzone zwischen Ober- und Unterschicht konnte in der Oberschicht Monomode-Wellenleitung nachgewiesen werden. Eine Erhöhung von $\Delta T$ ohne Unterbrechung des Epitaxieprozesses, wie es bei einem einstufigen, nicht unterbrochenen Epitaxieprozeß mit lediglich Erhöhung der Rotationsgeschwindigkeit möglich ist, kommt wegen der großen thermischen Zeitkonstanten des Systems nicht in Betracht.

Der Unterschied im Pb-Gehalt, der zu einem gewünschten Brechungsindexunterschied $\Delta n$ führt, kann außer über die Epitaxiebedingungen auch über die Schmelzzusammensetzung beeinflußt werden. Hierbei spielt das Verhältnis von Pb : B eine wesentliche Rolle. Während in Schmelze I das molare Verhältnis $R_1 = $ Pb : B = 7,1 betrug, war die Schmelze II (vgl. Tabelle 1) mit $R_1 = 4,0$ reicher an Bor; gleichzeitig wurden aber auch die Kationenfraktionen von Fe und Y erhöht, wobei außerdem deren Verhältnis $R_3 = $ Fe:Y auf 16,2 anstieg. Da bei dieser Schmelze der absolute Einbau von Blei größer ist als in Schmelze I unter vergleichbaren Bedingungen, läßt sich hiermit ebenfalls ein höherer Wert $\Delta n$ durch Erhöhung der Rotationsgeschwindigkeit erreichen, wie aus den Daten für die Doppelschicht Nr. 3 in Tabelle 2 hervorgeht. Mit $\Delta n = 4,7x10^{-3}$ war auch in diesem Fall die obere Schicht ein Monomode-Wellenleiter.

Welche Parameter zur Änderung des Brechungsindex zwischen den beiden magnetooptischen Schichten am zweckmäßigsten zum Realisieren eines bestimmten, gewünschten optischen Wellenleiters sind, wird der Fachmann von Fall zu Fall unterschiedlich auswählen. Bei gleichzeitigem Einbau von z.B. Gallium oder auch Aluminium neben Blei in Eisen-Granat-Schichten kann der Brechungsindexsprung noch vergrößert werden. Eine Erhöhung der Rotationsgeschwindigkeit des Substrates in der Schmelze, aber auch die Erhöhung der Unterkühlung der Schmelze bewirken eine Verminderung des Einbaus von Gallium bzw. von Aluminium auf dem Oktaederplatz und damit eine Erhöung des Brechungsindex (vgl. z.B. J. Chrystal Growth 52 (1981), Seiten 722 bis 728).

**Patentansprüche**

1. Verfahren zur Herstellung eines planaren optischen Wellenleiters (1) mit einer Kristalleinheit, die aus einem nichtmagnetischem Substrat (3) mit einer ersten und einer zweiten magnetooptischen Schicht besteht, wobei die beiden Schichten aus einem Material auf der Basis von Eisen-Granat bestehen und einen Brechungsindexunterschied zwischen $1x10^{-3}$ und $1x10^{-2}$ aufweisen, mit folgenden Schritten:
   - Epitaktisches Abscheiden der ersten Schicht auf das in einer unterkühlten, Eisen-Granat enthaltenden Schmelze mit einer ersten Rotationsgeschwindigkeit rotierende Substrat;
   - epitaktische Abscheiden der zweiten Schicht auf der ersten Schicht aus ein und derselben Schmelze bei einer zweiten Rotationsgeschwindigkeit,

   wobei der Einbau von Brechungsindex ändernden Ionen in das Eisen-Granat-Material durch die Rotationsgeschwindigkeit des Substrates gesteuert wird und die Änderung der Rotationsgeschwindigkeit des Substrates so erfolgt, daß sich der vorgesehene Brechungsindexunterschied zwischen den zwei magnetooptischen Schichten ergibt.

2. Verfahren nach Anspruch 1, dadurch gekennzeichnet, daß magnetooptische Schichten (5),(7) der Zusammensetzung $(Y,Pb)_3Fe_5O_{12}$ auf einem Substrat (3) der Zusammensetzung $Gd_3Ga_5O_{12}$ epitaktisch abgeschieden werden.

3. Verfahren nach Anspruch 2, dadurch gekennzeichnet, daß auf dem Substrat (3) eine erste magnetooptische Schicht (5) einer Zusammensetzung $Y_{3-x}Pb_xFe_5O_{12}$ mit x = 0,007 bis 0,025 epitaktisch abgeschieden wird.

8

**4.** Verfahren nach Anspruch 2, <u>dadurch gekennzeichnet</u>, daß auf der ersten magnetooptischen Schicht (5) eine zweite magnetooptische Schicht (7) einer Zusammensetzung $Y_{3-x}Pb_xFe_5O_{12}$ mit x = 0,02 bis 0,04 epitaktisch abgeschieden wird.

**Claims**

**1.** Method of manufacturing a planar optical waveguide (1) having a crystal unit which comprises a non-magnetic substrate (3) having a first and a second magnetooptical layer, both layers consisting of an iron garnet-based material and exhibiting a refractive index difference in the range between $1 \times 10^{-3}$ and $1 \times 10^{-2}$, said method comprising the following steps:
- epitaxial deposition of the first layer on the substrate rotating at a first speed of rotation in a supercooled iron-garnet-containing melt;
- epitaxial deposition of the second layer, from the same melt, on the first layer at a second speed of rotation,

the incorporation of refractive index-changing ions into the iron-garnet material being controlled by the speed of rotation of the substrate, and the change of the speed of rotation of the substrate taking place in such a manner that the predetermined refractive index difference between the two magneto-optical layers is obtained.

**2.** Method as claimed in Claim 1, characterized in that magneto-optical layers (5,7) having the composition $(Y, Pb)_3Fe_5O_{12}$ are epitaxially deposited on a substrate (3) having the composition $Gd_3Ga_5O_{12}$.

**3.** Method as claimed in Claim 2, characterized in that a first magnetooptical layer (5) having the composition $Y_{3-x}Pb_xFe_5O_{12}$, where $\underline{x}$ = 0.007 to 0.025, is epitaxially deposited on the substrate (3).

**4.** Method as claimed in Claim 2, characterized in that a second magnetooptical layer (7) having the composition $Y_{3-x}Pb_xFe_5O_{12}$, where $\underline{x}$ = 0.02 to 0.04 is epitaxially deposited on the first magneto-optical layer (5).

**Revendications**

**1.** Procédé de fabrication d'un guide d'ondes optiques plan (1) comprenant une unité cristalline qui consiste en un substrat non magnétique (3) comprenant une première et une deuxième couche magnéto-optique, les deux couches consistant en une matière à base de grenat de fer et présentant une différence d'indice de réfraction située entre $1 \times 10^{-3}$ et $1 \times 10^{-2}$, comprenant les stades suivants :
- dépôt épitaxial de la première couche sur le substrat tournant à une première vitesse de rotation dans une masse fondue contenant du grenat de fer surfondu;
- dépôt épitaxial de la deuxième couche sur la première couche à partir de la même masse fondue à une deuxième vitesse de rotation,

l'insertion des ions modifiant l'indice de réfraction dans le grenat de fer étant régie par la vitesse de rotation du substrat et la modification de la vitesse de rotation du substrat étant telle que la différence prévue d'indice de réfraction entre les deux couches magnéto-optiques soit obtenue.

**2.** Procédé suivant la revendication 1, caractérisé en ce que des couches magnéto-optiques (5, 7) de la composition $(Y,Pb)_3Fe_5O_{12}$ sont déposées par épitaxie sur un substrat (3) de la composition $Gd_3Ga_5O_{12}$.

**3.** Procédé suivant la revendication 2, caractérisé en ce qu'une première couche (5) d'une composition $Y_{3-x}Pb_xFe_5O_{12}$ avec x = 0,007 à 0,025 est déposée par épitaxie sur le substrat (3).

**4.** Procédé suivant la revendication 2, caractérisé en ce qu'une deuxième couche magnéto-optique (7) d'une composition $Y_{3-x}Pb_xFe_5O_{12}$ avec x = 0,02 à 0,04 est déposée par épitaxie sur la première couche magnétooptique (5).

FIG.1

$Y_{3-x} Pb_x Fe_5 O_{12}$

$\omega_2 = 160 min^{-1}$

$\omega_1 = 40 min^{-1}$

$\longrightarrow d \ (nm)$

FIG. 2